# EUROPEAN PATENT APPLICATION

(11) **EP 1 698 417 A1**
(43) Date of publication of application: **06.09.2006**
(21) Application number: 04807239.1
(22) Date of filing: 17.12.2004
(51) Int. Cl.: B23C 5/20

(54) **CUTTING TOOL BODY AND CUTTING TOOL**

(30) Priority: 17.12.2003 JP 2003419536; 07.12.2004 JP 2004354281; 07.12.2004 JP 2004354715; 07.12.2004 JP 2004354684
(71) Applicant: NGK Spark Plug Co., Ltd., Nagoya-shi, Aichi 467-0872 (JP)
(72) Inventor: KUMAKIRI, Takayuki; c/o NGK SPARK PLUG CO., LTD., Nagoya, Aichi 4670872 (JP); ITO, Masayoshi; c/o NGK SPARK PLUG CO., LTD., Nagoya, Aichi 4670872 (JP); SHINDO, Tomoaki; c/o NGK SPARK PLUG CO., LTD., Nagoya, Aichi 4670872 (JP)
(74) Representative: Nicholls, Michael John
(86) International application number: PCT/JP2004/018881
(87) International publication number: WO 2005/058533

(57) **Abstract**

This invention provides a cutting tool having a cutting insert holder which has a lighter weight and can be produced at a lower cost than that made of aluminum.

The base of the cutting insert holder, to which at least one cutting insert is fixed, is made of an amorphous plastic including from 30% to 60% of glass fiber. The cutting insert holder has at least one female-screw member, such as a screw thread coil (e.g. a HELI-SERT® or Heli-Coil® insert), which has a screw tap for securing an adjusting member, to which a cutting insert has been fixed, to the base by screw-driving of a hexagon socket head cap bolt. The female-screw member is fixedly embedded in the inner end of an insert-holding recess formed in the base.

## Description

### Technical Field

The present invention relates to a cutting insert holder for turning tools and rotating cutting tools, and a cutting tool provided with the cutting insert holder to which at least one cutting insert such as a throwaway tip is fixed, suitable for face milling cutters and boring bars used in a machining center. In the followings, cutting tools may simply be called tools.

### Background Art

The cutting insert holder, used for turning tools and rotating cutting tools, is usually made by machining a log material obtained by cutting a round bar of iron-containing metal such as steel, which is also called a round steel, or a square bar of the same metal. The reason that steel is employed for the material is that it has suitable strength, workability, and resistance to a shock that the cutting insert holder receives when it is used in a cutting tool, as well as merits from an economical viewpoint. However, when the workpiece is made of aluminum or an aluminum alloy and the cutting is relatively easy, the cutting insert holder need not have a large strength. Therefore, for this kind of cutting, cutting insert holders, part of which is made of an aluminum alloy, which are able to increase the speed and the efficiency of cutting and to decrease the weight of the tool, have been proposed. See JP2000-95211, A.

In order to improve the efficiency or productivity of machining a workpiece, it is important to reduce the time necessary for changing tools with an automatic tool changer, which is abbreviated to an ATC, as well as to increase the cutting speed. In order to realize the latter are required increasing the rotating speed of the cutting tool, which is the rotating speed of the main shaft thereof, and enlarging the size, such as the diameter or the length, of the tool. In order to reduce the time for changing the tools, which is an idle time in working, it is necessary to do in an instant the changing operation that includes removing a cutting tool from the main shaft, returning it to the tool magazine, taking another cutting tool from the tool magazine, and fixing the cutting tool to the main shaft of the machining center. A demand for an ultra-high speed changing has been increased recently.

In order to speed up the changing with an ATC, in addition to the limitation of the weight, the length, and the outer diameter of the cutting tool, the moment which is generated when the cutting tools are changed is also limited for each changer. When the changer arm, which we might simply call arm, of an ATC for changing cutting tools holds a cutting tool and sets it to the main shaft of the machining center, or when the arm stows the cutting tool having been removed from the main shaft in the tool magazine, the arm grasps the base end of the tool holder, which is generally called "arbor", and then quickly moves it. This quick movement produces a moment. Specifically, since the cutting tool is set to the main shaft in an instant, when the moment generated in the changing, which will sometimes be called "changing moment" hereinafter, is increased, it may cause an inclined insertion of the tool holder to the main shaft of the machine, which hinders an accurate setting of the tool. In such cases, the cutting tool may fall off the tool holder. Therefore a limitation of the magnitude of the moment is very important. The moment in the changing is the multiplication of the weight of the cutting tool by the distance between the center of gravity of the cutting tool and the part held by the arm, which is also called "gauge line", located near the basal end of the tool holder. In typical machining centers, the weight of the cutting tool is limited to 8 kg or less, and the moment of the machine to 6 N·m or less.

In order to meet the demand for speeding up the changing of cutting tools, some cutting tools employ a cutting insert holder made of a light alloy such as an aluminum alloy to reduce the weight of the cutting tool, which, in turn, leads to a reduction in the moment generated in changing the tools. See JP2000-95211, A.

However, the cutting insert holder of aluminum or an aluminum alloy, which will sometimes be called "aluminum" hereinafter, has a defect of high production cost. It is because cutting insert holders of this kind are made, in the same way as those of steel, by machining a logmaterial obtained by cutting a bar, such as a round bar, of aluminum. In other words, the production of the cutting insert holders of aluminum requires many processing steps from obtaining raw materials to the completion, in the same way as that of the cutting insert holders of steel. In addition, aluminum is more expensive than steel. As a result, cutting operations using cutting insert holders of aluminum lead to a rise in the working cost, although weight saving of the holders can be achieved.

Furthermore, cutting insert holders with a lighter weight, lighter than those made of aluminum, are strongly desired. There is such an increasing strict demand, with NC machine tools such as machining centers, not only for rotating the cutting tool at a higher speed, but also for changing the tools more quickly, to improve the efficiency of working.

Among conventional cutting tools, those that are provided with indexable inserts, or throwaway tips, fixed thereto, require a considerable time to change the inserts. In particular, cutting tools with several indexable cutting inserts, such as milling cutters, require a lot of time to change the inserts. It is because the changing includes the disposal or removal of chips and cutting oil, and the adjustment of the heights of the cutting edges of the inserts requires a lot of time. Since the time necessary for changing the inserts is an idle time, the working time is prolonged, which, in turn, causes the working cost to be raised. A solution for these problems is desired.

### Summary of the Invention

An objective of the present invention is to reduce the weight of cutting tools and the cost for preparing the tools, and to improve the efficiency of cutting workpieces, which leads to a reduction in the cost for working.

Another objective of the present invention is to provide a cutting insert holder which has a weight lighter than that of aluminum and can be prepared at a cheaper cost than the latter. The present invention also intends to provide a cutting tool which has the cutting insert holder equipped with cutting inserts.

Still another objective of the present invention is to accelerate the changing of the cutting tools with an ATC, or reduce the time necessary for the changing, which, in turn, results in an improvement in working efficiency.

In order to achieve the objectives, the present invention provides a cutting insert holder comprising a base made of a plastic to which at least one cutting insert is fixed.

In a preferable embodiment, the base is made through injection molding.

In another preferable embodiment, the cutting insert holder further comprises at least one adjusting member having a hole, and at least one metal female-screw member which is fixedly embedded in the base, the metal female-screw member having a screw tap for receiving a male screw, whereby the cutting insert is fixed to the base by passing the male screw through the cutting insert and through the hole in the adjusting member and driving home the male screw into the screw tap.

In still another preferable embodiment, the cutting insert holder further comprises at least one metal female-screw member which is fixedly embedded in the base, the metal female-screw member having a screw tap for receiving a clamp screw, whereby the cutting insert is fixed to the base by driving home the clamp screw through a hole pierced in the cutting insert into the screw tap.

In a further preferable embodiment, the cutting insert holder further comprises at least one adjusting member which is fixedly embedded in the base, the adjusting member having a screw tap for receiving a clamp screw, whereby the cutting insert is fixed to the base by driving home the clamp screw through a hole pierced in the cutting insert into the screw tap.

In a still further preferable embodiment, the base and the female-screw member are formed integrally through insert molding.

In still another preferable embodiment, the base and the adjusting member are formed integrally through insert molding.

In a preferable embodiment, the cutting insert holder is used for a rotating cutting tool.

In another preferable embodiment, the cutting insert holder is used for a throwaway cutting tool.

In a further preferable embodiment, the plastic is an amorphous plastic including from 30 wt% to 60 wt% of glass fibers.

In a still further preferable embodiment, the amorphous plastic is a polyether imide resin.

The present invention also provides a cutting tool comprising the cutting insert holder described in any one of the preceding.paragraphs and at least one cutting insert secured to the cutting insert holder.

In a preferable embodiment, the cutting tool comprises the cutting insert holder and the cutting insert wherein the cutting insert is secured to the adjusting member of the cutting insert holder.

In another preferable embodiment, the cutting tool further comprises a tool holder to which the cutting insert holder is secured.

In a still preferable embodiment, the cutting insert holder is secured to the tool holder by screw-driving a screw member.

In a further preferable embodiment, the cutting insert holder is secured to the tool holder by hammering a pin.

Since the present invention employs a plastic material for the base, it is possible to reduce the weight of the cutting insert holder than employing an aluminum material therefor. Furthermore, the excellent workability of plastic makes it possible to reduce the production cost of the cutting insert holder. In summary, the present invention realizes the cutting insert holder which has a weight lighter than that of aluminum and which can be produced at a lower cost by employing a plastic material for the base. The cutting insert holder is suitable for cutting workpieces made of a light metal, such as aluminum or an aluminum alloy, the temperature of which does not rise very high while it is being cut.

In addition, typical factors that can cause a serious damage in, for example, machining in an unmanned factory, are a breakdown in the machine tool itself, such as a machining center, due to a break in the metal cutting insert holder or a separation from the chuck, and damage to an expensive workpiece such as a transmission case for vehicles. Specifically, when a break occurs in the metal cutting insert holder under high-speed rotation, machines that are hit by the broken fragments receive serious damage. On the other hand, when fragments separated from a broken base of the cutting insert holder made of plastic, such as that in accordance with the present invention, hit the workpiece or the machines around it, the fragments of plastic will not damage them as seriously as those of a base made of metal. It is because the plastic cutting insert holder is neither harder nor stronger than the cutting machines and the workpieces. Therefore the cutting insert holder in accordance with the present invention is also able to reduce damage when problems occur.

Since the base to which the cutting insert is fixed is made through injection molding, the present invention makes it possible to produce the cutting insert holder at a lower cost, compared with the case where the base is produced from a plastic material such as a plastic block or bar by machining such as cutting.

Also, the cutting insert holder in accordance with the present invention has at least one metal female-screw member having a screw tap, or at least one adjusting member having a screw tap, as mentioned above. When the base and the female-screw member or adjusting member is formed integrally through insert molding, a cutting insert can be fixed tightly to the cutting insert holder by driving home the male screw, through the cutting insert, into the screw tap. When a screw tap is formed in the female-screw member or pierced in the adjusting member before the insert molding, the location of the screw tap can precisely be determined. The screw tap may also be made by tapping a non-tapped female-screw member or non-tapped adjusting member after integrating it with the base through insert molding. This method can also make the female-screw member or adjusting member integrated into the base.

Moreover, the cutting tool in accordance with the present invention is able to endure a relatively large cutting resistance, because the cutting insert holder having the base and the adjusting member made integrally through insert molding can disperse the cutting resistance which the cutting insert receives, all over the cutting insert holder. The cutting insert or the adjusting member to which a cutting insert has been fixed is tightly secured to the base by driving home the male screw into the screw tap of the female-screw member. Also, the cutting insert is tightly secured to the base by driving a clamp screw into the screw tap in the adjusting member integrated with the base. Cutting tools employing the cutting insert holder of the present invention are especially suitable for cutting workpieces of light metal, such as aluminum or aluminum alloy, of which temperature does not rise very high during the cutting.

The employment of the cutting insert holder in accordance with the present invention for a throwaway cutting tool makes it possible to reduce the weight of the cutting insert holder as well as the production cost thereof. Because the cutting insert holder of the present invention is intended to be used for throwaway cutting tools and cutting inserts are fixedly secured, the cutting tool with the cutting inserts can be changed in its entirety. This changing method is different from the conventional one in which only indexable inserts are changed. Thus, the cutting tool of the present invention does not require the adjustments such as the equalization of the heights of the cutting edges, which was an essential step with conventional tools. This invention can dramatically reduce the idle time in the actual working, which, in turn, results in the improvement in the working efficiency. As understood, the present invention can reduce the administration cost related to the cutting tool, which leads to a decrease in the entire working cost.

The present invention, in which the plastic cutting insert holder is fixed to a metal tool holder, is able to reduce the entire weight of the cutting tool, compared with conventional ones made of metal in their entirety. Therefore the cutting tool having the same weight as a conventional one can take a greater length or a longer diameter. This advantage, in turn, can reduce the number of the tools, as well as the number of steps and the time length of the working. For example, a working process having been done in several steps can be done in a single step with the cutting tool of the present invention. Also, the reduced weight of the tool makes it possible to change the tools accurately and quickly, without setting the inserts in an inclined way or dropping them.

Because of the reduced weight of the cutting insert holder, the center of gravity of the cutting tool can be shifted toward the basal end of the tool holder, or toward the main shaft of the machining center, which reduces the moment in changing the cutting tools. Specifically, since the cutting insert holder of the present invention is made of plastic and the weight of the cutting insert holder can be reduced compared with that of a metal cutting insert holder, the center of gravity of the cutting tool can be shifted along the axis of the tool holder toward the basal end thereof, which is located apart from the cutting insert holder. As mentioned above, this shift makes it possible to decrease the moment in changing the cutting tools. The reduced moment, in turn, makes it possible to meet the demand for a much higher speed of changing cutting tools with an ATC or a reduction in time necessary for it. In summary, the present invention enables working with a machining center to be more efficient or productive.

### Brief Description of the Drawings

Figure 1 is a fragmentary sectional front elevation of a rotating cutting tool which is an example of the present invention.
Figure 2 is a bottom plan view of the rotating cutting tool in Figure 1.
Figure 3 is a fragmentary side view of the tool in Figure 1, viewed in the direction of arrow A.
Figure 4 is an enlarged illustration to show the female-screw member, which is a screw thread coil in this example, fixedly embedded in the cutting insert holder.
Figure 5 is a partially sectional front elevation showing another example of the rotating cutting tool in accordance with the present invention.
Figure 6 is an illustration, viewed from the front, of the rotating cutting tool shown in Figure 5.
Figure 7 is an enlarged sectional view which explains the female-screw member fixedly embedded in the cutting insert holder.
Figure 8 is a sectional fragmentary view, cut along line B-B in Figure 7.
Figure 9 is an enlarged view of the principal part, with a male screw inserted, of the Figure 6.
Figure 10 is a sectional fragmentary view, cut along line B-B in Figure 9.
Figure 11 is a side fragmentary view of a part which is formed by the insert molding of the base and the adjusting member.
Figure 12 is a sectional fragment view, cut along line D-D in Figure 11.
Figure 13 is a sectional fragmentary view, cut along line E-E in Figure 11.
Figure 14 is a partially sectional front elevation showing an example of the cutting tool in accordance with the present invention.
Figure 15 is a bottom view of the cutting tool in Figure 14, viewed from the bottom in the same figure.
Figure 16 is an enlarged sectional fragmentary view, cut along line A-A in Figure 14.
Figure 17 is a sectional fragmentary view, cut along line B-B in Figure 14.
Figure 18 is an exploded view to explain how the cutting insert holder is fixed to the tool holder.
Figure 19 is an end view of the cutting insert holder included in the cutting tool shown in Figure 14, viewed from the back end of the holder, or from the top side thereof in Figure 18.
Figure 20 is an end view of the cutting insert holder included in the cutting tool shown in Figure 14, viewed from the front end of the holder, or from the bottom side thereof in Figure 18.
Figure 21 is a vertical sectional view, showing another cutting tool, along the axis thereof.
Figure 22 is a partially sectional front elevation showing still another cutting tool.
Figure 23 is a front end view of the cutting tool shown in Figure 22, viewed in the direction of arrow D in the same figure.

### Explanation of Reference Numerals

- 1: cutting insert holder
- 1a: base
- 1b: upper part
- 1c: lower part
- 1d: back end
- 1e: groove
- 1f: tenon
- 2: hole
- 2a: large cylindrical hole
- 2b: small cylindrical hole
- 2c: cylindrical opening
- 3: front end
- 4: outer peripheral face
- 4a: screw
- 5: insert recess (or insert-holding recess)
- 5a: cutting insert seat
- 6: inner end
- 8: screw tap
- 9g: indentation
- 10: screw
- 10a: head of the screw
- 10b: shank of the screw
- 11: cutting insert
- 13: clamp screw
- 15: adjusting member
- 16: stepwise bolt hole
- 17: hexagon socket head cap bolt
- 17a: head
- 19: female-screw member
- 19b: outer peripheral groove
- 20: slope
- 21: screw with a head
- 22: screw tap
- 24: screw tap
- 51: cutting insert holder
- 61: cutting insert holder
- 65: adjusting member
- 66: cavity
- 71: tool holder
- 72: shaft
- 73: projection
- 73a: end face
- 74: bolt indentation
- 76: large cylindrical part
- 76a: front end face
- 77: protrusions
- 79: engaging part
- 80: large cylindrical positioning part
- 81: grip groove
- 83: mortise
- 84: fixing screw
- 91: cutting insert holder
- 95: adjusting member
- 101: cutting tool assembly
- 201: boring bar

### Detailed Description of the Preferred Embodiments

Preferable embodiments of the cutting insert holder and the cutting tool according to the present invention are summarized hereinafter.
(1) The cutting insert holder according to the present invention comprising the base made of plastic, to which at least one cutting insert is fixed.
(2) The cutting insert holder as described in item (1) above, characterized by the use thereof for rotating cutting tools.
(3) The cutting insert holder as described in item (1) or (2) above, wherein the cutting insert holder is further provided with at least one adjusting member to which a cutting insert has been fixed, and at least one metal female-screwmember which is fixedly embedded in the base, the metal female-screw member having a screw tap for receiving a male screw, to secure the adjusting member to the base by driving home the male screw.
(4) The cutting insert holder as described in item (1) or (2) above, wherein the cutting insert holder is further provided with at least one metal female-screw member which is fixedly embedded in the base, the metal female-screw member having a screw tap for receiving a clamp screw, whereby the cutting insert is fixed to the base by driving home the clamp screw through a hole pierced in the cutting insert into the screw tap.
(5) The cutting insert holder as described in any one of items (1) to (4), wherein the plastic is an amorphous plastic including from 30 to 60% of glass fibers.
(6) A cutting tool having the cutting insert holder as described in any one of items (1) to (5) above, to which at least one cutting insert is fixed.
   Other preferable embodiments of the cutting insert holder and the cutting tool according to the present invention are summarized hereinafter.
(7) The cutting insert holder wherein the base *per se* is formed through injection molding of the plastic.
(8) The cutting insert holder as described in item (7) above, characterized by the use thereof for rotating cutting tools.
(9) The cutting insert holder as described in item (7) or (8) above, wherein the cutting insert holder is provided with at least one metal member, which has been drilled to have a screw tap, and which has been inserted in the injection molding of the base.
(10) The cutting insert holder as described in item (7) or (8) above, wherein the cutting insert holder is provided with at least one metal female-screw member having a screw tap, which metal female-screw member has been inserted in the injection molding of the base.
(11) The cutting insert holder as described in item (7) or (8) above, wherein the cutting insert holder is provided with at least one adjusting member which has been inserted in the injection molding of the cutting insert holder.
(12) The cutting insert holder as described in item (9) or (10), wherein the screw tap is for receiving the male screw so as to fix the cutting insert to the base by driving home the male screw into the screw tap.
(13) The cutting insert holder as described in item (9) or (10), wherein the screw tap is for receiving the male screw so as to fix each of the adjusting member to the base by driving home the male screw into the screw tap.
(14) The cutting tool made by fixing the cutting insert to the base of the cutting insert holder as described in item (7) or (8).
(15) The cutting tool made by fixing the adjusting member to the base of the cutting insert holder as described in item (11) .
(16) The cutting tool made by fixing the cutting insert to the cutting insert holder as described in item (12) by driving home the male screw into the screw tap that the cutting insert holder has.
(17) The cutting tool made by fixing the adjusting member, to which the cutting insert has been secured, to the cutting insert holder as described in item (13) by driving home the male screw into the screw tap that the cutting insert holder has.
   Still other preferable embodiments of the cutting insert holder and the cutting tool according to the present invention are summarized hereinafter.
(18) A cutting insert holder made of plastic, which is used as a throwaway cutting insert holder.
(19) The cutting insert holder as described in item (18) above, wherein the cutting insert holder is for a rotating cutting tool.
(20) The cutting insert holder as described in item (18) or (19), wherein the cutting insert holder is formed through injection molding of the plastic.
(21) The cutting insert holder as described in item (18) or (19) above, wherein the cutting insert holder is provided with at least one metal member, which has been drilled to have a screw tap, and which has been inserted in the injection molding of the base.
(22) The cutting insert holder as described in item (18) or (19) above, wherein the cutting insert holder is provided with at least one metal female-screw member having a screw tap, which metal female-screw member has been inserted in the injection molding of the base.
(23) The cutting insert holder as described in item (20) above, wherein the cutting insert holder is provided with at least one adjusting member which has been inserted in the injection molding of the cutting insert holder.
(24) The cutting insert holder as described in item (21) or (22), wherein the screw tap is for receiving the male screw so as to fix the cutting insert to the base by driving home the male screw into the screw tap.
(25) The cutting insert holder as described in item (21) or (22), wherein the screw tap is for receiving the male screw so as to fix the adjusting member to the base by driving home the male screw into the screw tap.
(26) A cutting tool, used as a throwaway cutting tool, made by fixing the cutting insert to the cutting insert holder as described in any one of items (18) to (20).
(27) The cutting tool, used as a throwaway cutting tool, made by fixing the cutting insert to the adjusting member of the cutting insert holder as described in item (23).
(28) The cutting tool, used as a throwaway cutting tool, made by fixing the cutting insert to the cutting insert holder as described in item (24) by driving home the male screw into the screw tap that the cutting insert holder has.
(29) The cutting tool, used as a throw-away cutting tool, made by fixing the adjusting member, to which the cutting insert has been secured, to the cutting insert holder as described in item (25) by driving home the male screw into the screw tap that the cutting insert holder has.
   Still further preferable embodiments of the cutting insert holder and the cutting tool according to the present invention are summarized hereinafter.
(30) A cutting tool comprising a tool holder and a cutting insert holder secured thereto, wherein the cutting insert holder has a base made of plastic and the tool holder is made of metal.
(31) The cutting tool as described in item (30), wherein the tool holder and the cutting insert holder are secured by driving a screw member into them.
(32) The cutting tool as described in item (30), wherein the cutting insert holder and the tool holder are secured to each other by hammering a pin into them.
(33) The cutting tool as described in any one of items (30) to (32), wherein the cutting tool holder is made of plastic through injection molding.
(34) The cutting tool as described in any one of items (30) to (33), wherein the cutting insert holder comprises at least one metal member, which has a screw tap for securing a cutting insert to the holder, and the metal member is embedded in the cutting insert holder.
(35) The cutting tool as described in any one of items (30) to (34), wherein the cutting insert is secured to the cutting insert holder.
(36) The cutting tool as described in any one of items (30) to (33), wherein the cutting insert holder comprises at least one metal member, which has a screw tap for securing an adjusting member to the holder, and the metal member is embedded in the cutting insert holder.
(37) The cutting tool as described in item (36), wherein the adjusting member is secured to the cutting insert holder by driving a male screw into the screw tap.
(38) The cutting tool as described in item (37), wherein the cutting insert is secured to the adjusting member.

Preferred embodiments of the cutting insert holder and the cutting tool will be explained in detail hereinafter.

### <The First Embodiment of the Cutting Tool Holder>

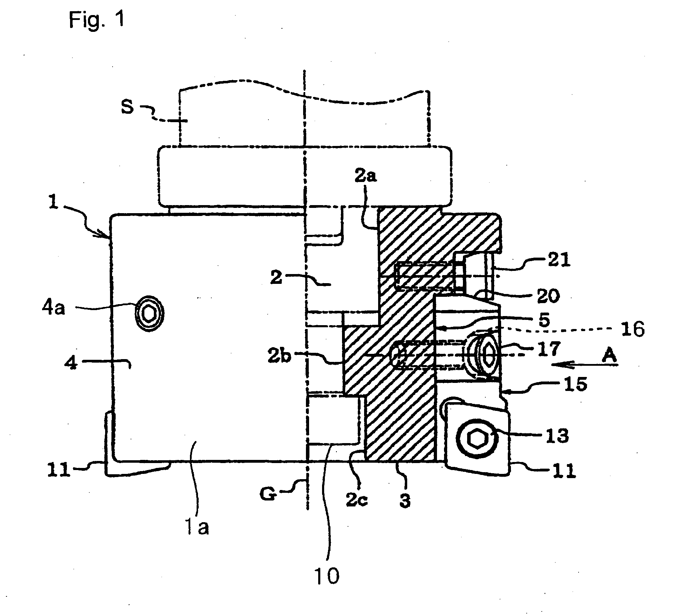

We will explain one of the best embodiments of the cutting insert holder and the cutting tool in detail, taking as an example a rotating cutting tool, which is a face milling cutter, shown in Figures 1-4.

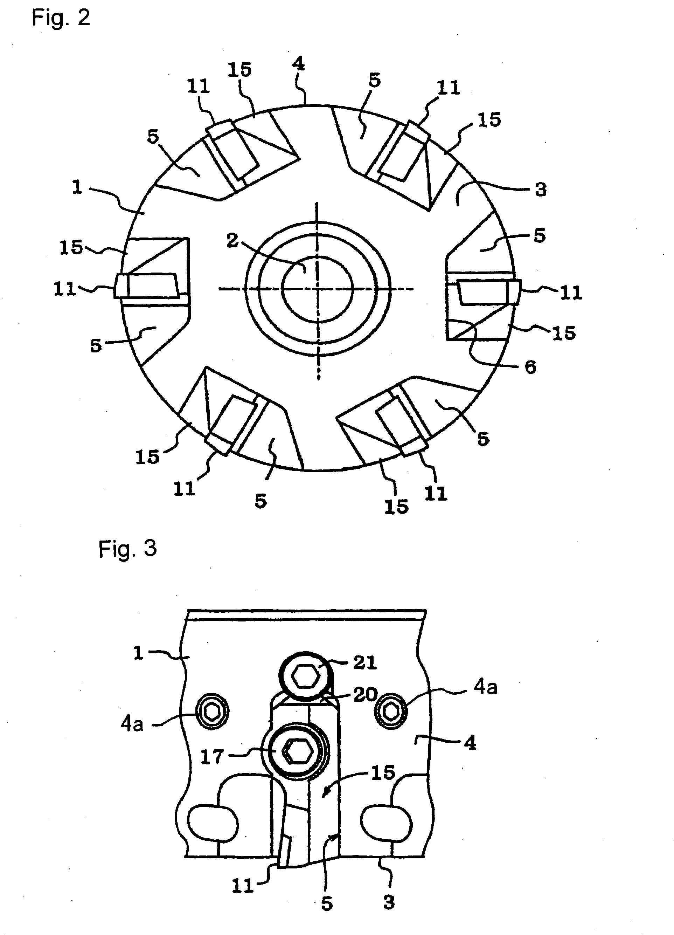

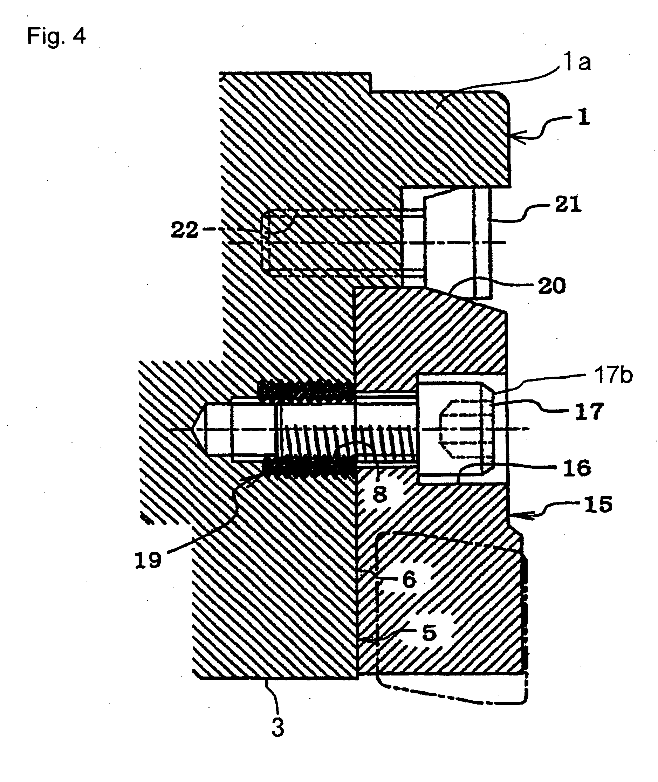

Figure 1 is a fragmentary sectional front elevation of the rotating cutting tool. Figure 2 is a bottom plan view of the rotating cutting tool in Figure 1. Figure 3 is a fragmentary side view of the tool in Figure 1, viewed in the direction of arrow A. Figure 4 is an enlarged illustration to show the female-screw member, which is a screw thread coil, such as a HELI-SERT® or Heli-Coil® insert in this example, fixedly embedded in the cutting insert holder.

In the figures, reference numeral 1 denotes a plastic rotation-cutting insert holder. The kind of the plastic and the method of producing the cutting insert holder 1 in this embodiment will be explained later.

As understood from Figures 1 and 2, the cutting insert holder 1 has a cylindrical base 1a. In the central part of the base 1a including the rotation axis G, a hole 2, passing through the base along the axis G, is pierced. The hole 2 is for fixing the cutting tool to the spindle S of the milling cutter. The upper part, which means the upper part on the sheet including Figure 1, of the hole 2 is enlarged to form a large cylindrical hole 2a to receive an end of the spindle S. At the middle part, the hole 2 has a smaller diameter, and this part is called a small cylindrical hole 2b. At the lower part, the hole 2 is enlarged again to form a cylindrical opening 2c in the front end 3 of the holder to receive the head of a screw 10, which is a bolt with a head, to fix the cutting tool to the spindle. The head of the screw 10 is accommodated in the opening in such a manner that the head is completely sunk in it. In the outer peripheral face 4, for example, six recesses 5 for fixing cutting inserts, which will be called "insert-holding recesses", are formed at regular angular intervals. The recesses are also open in the front end 3. The insert-holding recesses 5 are made in the same shape and the size, so that the fixing of cutting inserts 11 and the removal of chips are facilitated. Also, at proper places in the outer peripheral face 4 of the cutting insert holder 1, are bored screw taps, into which screws 4a for balancing are driven. Thus, the appearance and the shape of the cutting insert holder 1 in this embodiment are essentially the same as those of conventional cutting insert holders made of a metal.

An adjusting member made of a metal such as chrome molybdenum steel, to which a cutting insert 11 of a cemented carbide has been fixed with a clamp screw 13, is secured to each insert-holding recess 5 by screw-driving an ordinary hexagon socket head cap bolt 17 made of steel. Specifically, as shown in Figure 4, a screw tap 8, into which the hexagon socket head cap bolt 17 is to be driven, is drilled in an inner end 6, which is the part near the rotation axis, of each insert-holding recess 5. The hexagon socket head cap bolt 17 is screwed into the screw tap 8 through a stepwise bolt hole 16 pierced in the adjusting member 15. The stepwise bolt hole has a longitudinal section like a step, and the vertical wall in Figure 4 makes a spot face for the bolt 17. The adjusting member 15 is secured by pressing the head 17b against the spot face. This securing means is the same as that of a conventional metal cutting insert holder.

What is important is that the screw tap 8 in the inner end 6 of the insert-holding recess 5 is not directly drilled in the plastic of the base 1a. In this embodiment, a larger screw tap, the diameter of which is larger than that of the bolt 17, is made in the plastic, and a female-screw member 19 made of a metal, such as a spring steel (e.g. SUP10), which has a female screw in its inner cylindrical face, is fixedly embedded in the larger screw tap. In other words, the female-screw member is integrated with the base 1a, thereby forming the cutting insert holder 1. Although it is possible to make a screw tap directly in the plastic, this method often causes problems; when a cutting insert 11 is changed, the bolt 17 is removed and then driven into the screw tap, the repetition of which tends to wear out and damage the thread of the female screw. Besides, the female screw tends to be broken by the driving torque. On the other hand, the employment of the female-screw member 19 prevents the female screw from the damage or breaking, which can prolong the life of the female screw. In this embodiment, a screw thread coil having the shape of a helix, such as a HELI-SERT® or Heli-Coil® insert, is used for the female-screw member 19. Specifically, a larger screw tap, which has a diameter larger than that of the bolt 17 and an inner cylindrical face threaded so that the thread engages with the helix in the outer peripheral face of the screw thread coil, is made in the plastic, and the screw thread coil is driven into the larger screw tap, and the folded spearhead for the driving is cut off so that the screw thread coil is fixed.

In this embodiment, the heights of the cutting edges of the respective cutting inserts 11 can be adjusted by shifting the adjusting members 15 a little along the axis G. Specifically, in order to shift a cutting edge toward the front end of the base 1a, which means to shift it downward on the sheet including Figure 1, a screw with a head 21 for adjusting the height is screwed into the base, with the head of the screw 21 pressed to a slope 20 at the back end, which is the upper end in Figure 1, of the adjusting member 15, whereby the adjusting member 15 is shifted along the axis G downward in the figure. For this adjustment, a screw tap 22, into which the screw 21 with a head is driven, is drilled in a part near the back end, which is the upper end in Figure 1, of the inner end 6 of the recess 5. Although it is not shown in the figures, this screw tap is also made, in the same way as the screw tap 8 described above, by fixedly embedding a screw thread coil, which is also a female-screw member, in the base 1a.

Thus, the cutting insert holder 1 according to the present invention is different from conventional cutting insert holders in the following respects. The cutting insert holder 1 of this embodiment has the base 1a made of plastic. The plastic base 1a has screw taps made by fixedly embedding in it metal female-screw members such as screw thread coils 19, which are members independent of the base. In other words, the cutting insert holder 1 of this embodiment has a plastic base 1a and metal female-screw members 19, such as screw thread coils, each of which has a screw tap 8 to receive a hexagon socket head cap bolt 17 to be driven therein. On the other hand, an adjusting member 15 to which a cutting insert 11 has been fixed is placed in each insert recess 5, and then the adjusting member is secured to the recess by driving home the screw 17 into the screw tap 8. To adjust the height of each cutting edge using the screw with a head 21 finalizes a rotating cutting tool. In this respect, the rotating cutting tool of the present invention is not different from conventional ones.

Since the rotating cutting tool of this embodiment has a plastic base 1a, it is possible to make the weight thereof lighter than the weights of conventional aluminum ones. Aluminumhas a specific gravity of 2.7, whilemost of the plastics have a specific gravity ranging between 1.2 and 1.7. The reduction in the weight improves working efficiency; it is able to make the rotating speed higher and the changing of cutting tools faster. Also, the base 1a made of plastic, which is easier to cut than aluminum, remarkably facilitates the production of the base 1a, which leads to a reduction in the production cost of the cutting insert holder 1, and then the rotating cutting tool.

Since the screw taps 8, 22 are formed by integrally embedding metal female-screw members 19 in the plastic base, this special structure is able to reduce the wear-out and damage that the thread of the female screw receives compared with the screw taps directly made in the plastic base. As a result, the life of the cutting insert holder may be prolonged. In other words, because the cutting insert holder 1 of this structure does not have any parts which are worn out or damaged by friction, or parts of which rubbing properties such as wear properties require consideration, other than the screws and the female screws, the present structure can contribute to the longevity of the cutting insert holder. Moreover, since the metal female-screw members are fixedly embedded in the base 1a, there is less probability of breakage in the threads. If the base is made of a plastic which is high in strength, hardness, and resistance to abrasion and wear, the screw taps may be formed directly in the base. Needless to say, a nut-type female screw in place of the screw thread coil may be used for the female-screw member. In any case, the female-screw member should be made of steel that has strong resistance to abrasion and wear.

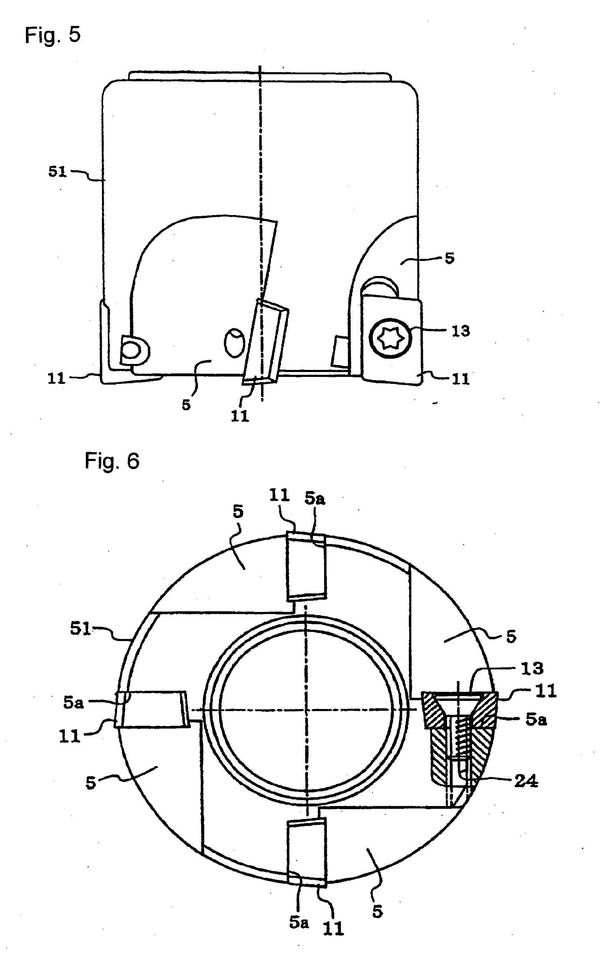

In the above-mentioned embodiment, the cutting inserts 11 are fixed to the insert recesses 5 of the base 1a through the adjusting members 15, which function as a radiator and expedite the release of heat via themselves when the temperature of the cutting inserts 11 is raised high because of cutting. The presence of the adjusting members efficiently prevents the plastic base 1a having insert recesses from being heated to a high temperature. However, the cutting insert holder 1 according to the invention does not require adjusting members 15 as an essential element. When a plastic material that is able to endure the heat generated by the cutting inserts is employed for the base, or the cutting tool is used for a cutting in which the heat generation is small and the temperature of the cutting inserts does not rise high, the cutting inserts need not wear the adjusting members, as the cutting insert holder 51 shown in Figures 5 and 6. Specifically, as shown in Figure 6, the cutting inserts 11 may be placed on cutting insert seats 5a of the respective insert recesses 5, without the adjusting members inserted. Then, the cutting inserts may be directly secured by driving clamp screws 13 into screw taps 24 made in the cutting insert seats 5a. In this embodiment, these screw taps 24, which receive clamp screws, may also be made, in the same way as those described above, by fixedly embedding female-screw members such as screw thread coils (e.g. a HELI-SERT® or Heli-Coil® insert) in the holder 51.

We are going to explain an example of the method of producing the cutting insert holder 1 shown in Figure 1. As raw material is employed a plastic round bar with a little larger diameter and a little greater length than those of the finished holder. Then, the bar is machined to the base with a desired shape and a desired size as shown in the figures. By fixedly embedding metal female-screw members 19 in the base, a cutting insert holder 1 is finalized.

This method is not different from the method for producing a conventional holder from a metal material, except for the formation of the screw taps. Therefore, the cutting tool holder of the present invention may be produced in essentially the same working steps as conventional holders.

However, since the base 1a is made of plastic, which is not a material hard to cut and therefore has only a little resistance to cutting, the base 1a is easy to machine. It is obvious that the cutting insert holder 1 of the invention can be produced at a very low cost even though metal female-screw members are fixedly embedded in the base 1a. In the case of the cutting insert holder 51 shown in Figure 5, the holder without adjusting members can be produced at a lower cost. When a material which is produced through, for example, injection molding so that it has a margin to be machined precisely at part that require precision working, is employed for a starting material to be machined, the production is further simplified. The female-screw member 19 having a screw tap 8 may be a metal nut-type member having a female screw in its inner face, fixedly embedded in the base 1a, which is produced through insert molding with the base 1a. In other words, when a metal female-screw member or nut-type member is employed for the member having a screw tap, the member may be fixedly embedded in the base by inserting the member in the mold when the base is formed through injection molding.

The plastic for the base of the cutting insert holder may be selected from the plastics which can work as the base for a necessary time period depending on the use of the cutting tool and the cutting conditions. Among them, an amorphous plastic, such as a polyether imide resin or a nylon 6-6, including from 30% to 60% of glass fibers, is preferable. The reason is that the cutting insert holder, even if it is used for cutting aluminumworkpieces, must naturally have as high heat resistance, strength, and rigidity as possible and a light weight, and that the amorphous plastic meets this requirement well. The amorphous plastic, such as a polyether imide resin, including from 30% to 60% of glass fibers has the following physical properties: The heat resistance is such that the plastic including the glass fibers has a deflection temperature under load, which is a heat distortion temperature under 1.82 MPa, of 200°C or more; the tensile strength, which is shown by the yielding point at 23°C, is 150 MPa or more; the Izot impact strength (at 23°C, using a test piece with a notch) is 100 J/m or more; and the specific gravity at a room temperature is 1. 7 or less.

Plastics suitable for the base of the cutting insert holder are engineering plastics such as a polysulfone, a polyethersulfone, a polyphenylene sulfide, a polyarylate, a polyimide-amide, a polyether imide as mentioned above, a polyether-etherketone, or a polyamide.

In the above-mentioned example, we explained the cutting insert holders for a face milling cutter. However, the use of the cutting insert holder according to the present invention is not limited to the face milling cutter; it can be applied to a wide variety of cutting tools. For example, the cutting insert holder may be used as a holder of bites for rotation-cutting where the cutting inserts are fixed to the cutting insert seats, or cutting insert recesses, of the holder. Furthermore, although the embodiment in which the cutting inserts are secured to the holder directly, or indirectly through the adjusting members by driving home the male screws into the screw taps that the base has, has been explained, the locking of the base and the cutting inserts is not limited to the screw-driving with the screw members; it is also realized with means other than that.

The present invention may also be embodied with modifications to the example we have described. The plastic material for the base may be chosen from materials, other than a polyether imide or a polyamide such as nylon 6-6, which have the requiredphysical ormechanical properties, such as strength, impact properties, rigidity, fatigue properties, hardness, heat resistance, thermal expansion coefficient, oil resistance, and water resistance, depending on the workpiece, the shape or structure and the size of the cutting tool holder, and the like. Also, materials for the adjusting member may be a spring steel (e.g. SUP10), a stainless steel (e.g. SUS303), etc. other than the chrome molybdenum steel.

### <The Second Embodiment of the Cutting Tool Holder>

The second embodiment of the cutting tool holder will be explained hereinafter.

The second embodiment is different from the first one in the following respects.

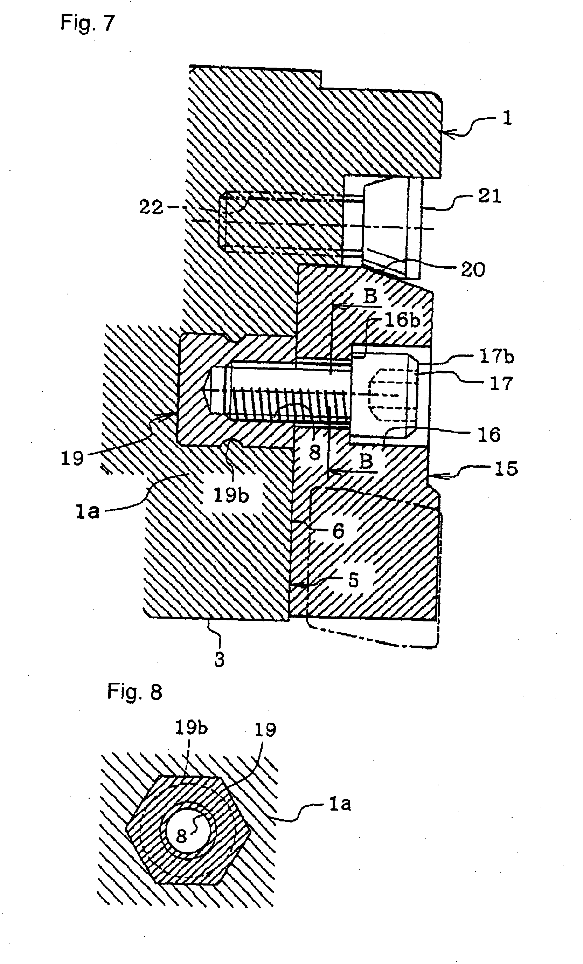

As shown in Figure 7, the screw tap 8 in the inner end 6 of the insert recess 5, used to fix an adjusting member 15 to which a cutting insert 11 has been secured, is not directly formed in the plastic of the base 1a, but is formed as a metal female-screw member 19 which is embedded in the base 1a by inserting the member when the base is made through injection molding. This female-screw member 19 is, as shown in Figure 7, a metal member having the shape of a bag 8, such as a cap nut. The female-screw member 19 has a circumferential groove 19b in the outer peripheral face thereof to improve fixation to the base or to prevent the female-screw member from slipping off. Furthermore, the shape of the member itself is, for example, a hexagon nut for the same reason. However, the female-screw member 19 may be an ordinary nut, or a member having a helical shape made of a material such as a spring steel (e.g. SUP10), or a screw thread coil, a specific example of which is a HELI-SERT® or Heli-Coil® insert.

Thus, the inner face of the screw tap 8 does not expose the plastic of the base 1a to the male-screw member, but is covered with the metal female-screw member 19. Therefore, the repetition of the driving of the hexagon socket head cap bolt 17 into and out of the screw tap 8 in changing the cutting inserts 11 does not wear out and damage the thread of the screw tap 8. In addition, the thread is not broken by the driving torque applied thereto during the screw-driving. Therefore the life of the female screws can be prolonged. Since the metal female-screw members 19 are inserted when the base 1a is injection molded, and not pressed or driven into the base 1a after the base 1a is formed, the members 19 are tightly fixed to the base 1a. Therefore the driving torque, generated when a hexagon socket head cap bolt 17 is screwed to fix the adjusting member 15 to the base 1a, hardly loosens the fixation between the female-screw member 19 and the base 1a.

In the second embodiment, the heights of the cutting edges of the respective cutting inserts 11 can also be adjusted by shifting the adjusting members 15 a little along the axis G, in the same way as in the first embodiment.

Thus, the cutting insert holder 1 according to the present invention is different from conventional cutting insert holders in the following two respects. First, the cutting insert holder 1 of this embodiment comprises a plastic base 1a made by injection molding and metal female-screw members. Second, the plastic base 1a has screw taps made by inserting metal female-screw members 19, which are members independent of the base, in the mold when the base is formed through injection molding. In other words, the cutting insert holder 1 of this embodiment is produced by injection molding, with the metal female-screw members 19, each of which has a screw tap 8, inserted in the mold. As shown in Figure 7, an adjusting member 15 to which a cutting insert 11 has been fixed is placed in each insert recess 5, and then the adjusting member is secured to the recess by driving home the screw 17 into the screw tap 8. To adjust the height of each cutting edge using a screw with a head 21 finalizes a rotating cutting tool.

Since the rotating cutting tool of this embodiment has a plastic base 1a, it is possible to make the weight thereof lighter than the weights of conventional ones made of a light metal such as aluminum. Aluminum has a specific gravity of 2.7, while most of the plastics have a specific gravity ranging between 1.2 and 1.7. The reduction in the weight improves working efficiency; it is able to make the rotating speed higher and the changing of cutting tools faster. Also, another characteristic of the base 1a is that it is not only a plastic article but also one made by injection molding. Therefore, the base itself is produced very efficiently, which leads to a reduction in the production cost of the cutting insert holder 1, and then the rotating cutting tool.

Since the screw taps 8, 22 are formed by inserting the metal female-screw members 19 in the mold when the plastic base is injection molded, this special structure is able to reduce the wear-out and damage that the threads of the female screws receive compared with those of female screws directly formed in the plastic base. As a result, the life of the cutting insert holder 1 may be prolonged. In other words, because the cutting insert holder 1 of this embodiment does not have any parts which are worn out or damaged by friction, or parts whose rubbing properties such as wear properties require consideration, other than the screws and the female screws, the present structure can contribute to the longevity of the cutting insert holder even though the screw-driving in the screw taps is repeated. Moreover, since the metal female-screw members 19 are fixed to the base 1a by insert molding, there is a reduced probability that even an excess driving torque, generated when a hexagon socket head cap bolt 17 is screwed to fix an adjusting member 15 to the base 1a, loosens the fixation between the female-screw member 19 and the base 1a.

In the above-mentioned embodiment, the cutting inserts 11 are fixed to the insert recesses 5 of the base 1a through the adjusting members 15, which function as a radiator and expedite the release of heat via themselves when the temperature of the cutting inserts 11 is raised high because of cutting. The presence of the adjusting members efficiently prevents the plastic base 1a having insert recesses from being heated to a high temperature.

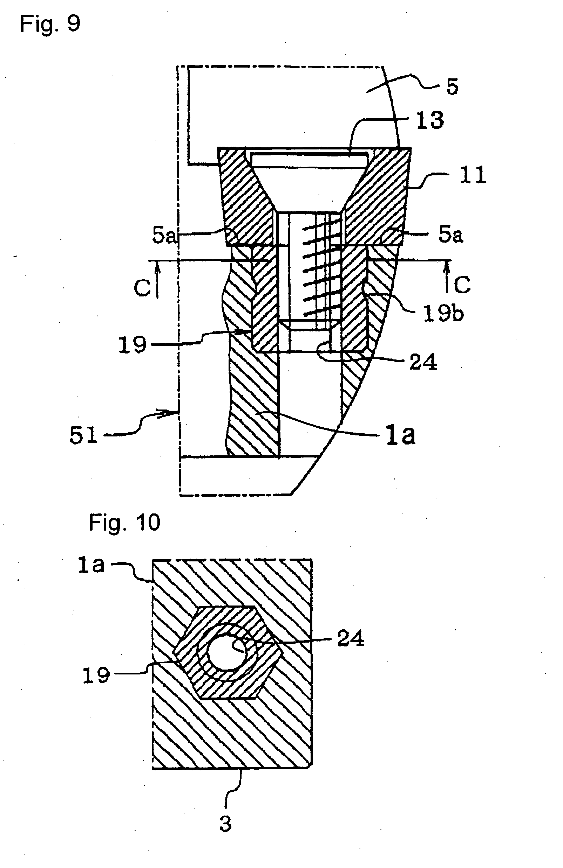

However, the cutting insert holder 1 according to the invention does not require adjusting members 15 as an essential element. When a plastic material that is able to endure the heat generated by the cutting inserts is employed for the base, or the cutting tool is used for a cutting in which the heat generation is small and the temperature of the cutting inserts does not rise high, the cutting inserts need not wear adjusting members, as the cutting insert holder 51 shown in Figures 5 and 6. Specifically, the cutting inserts 11 may be placed on cutting insert seats 5a of the respective insert recesses 5, without the adjusting members inserted. Then, the cutting inserts may be directly secured by driving clamp screws 13 into screw taps 24 made in the cutting insert seats 5a. Even when the adjusting members are not used, the base 1a should have hexagon-nut-shaped metal female-screw members 19 having screw taps 24 into which clamp screws 13 are driven home, integrally formed through insert molding when the base 1a is injection molded, as shown in Figures 9 and 10. Although the female-screw member 19 in Figure 9 is an open-ended one, the member may also be a bag-shaped one, as mentioned above. Reference numeral 19b in Figure 9 denotes a circumferential groove to prevent the member from slipping off.

Metal female-screw members having the shape of a bag are convenient for insert molding, because the plastic does not adhere to the insides of the members, which are the female screws, in the insert molding. The bag-shaped female-screw members do not require protecting means which is necessary when open-ended female-screw members are inserted in the mold in injection molding.

Hereinbefore, the cutting insert holder 1, 51 having screw taps 8, 24 in accordance with the present invention is made by inserting metal female-screw members 19 in the mold when the base 1a is injection molded. The cutting insert holder of the present invention may be made also in the following way. Specifically, metal members are inserted in the mold when the base is injection molded, and screw taps are made in the members in a later step. This method is able to improve accuracy of the location of each screw tap, as well as to eliminate the necessity of the protecting means mentioned above.

So far the screw taps that the cutting insert holder has are used to fix the adjusting members or the cutting inserts to the base, or to move the adjusting members to adjust the heights of the cutting edges. The base may additionally have screw taps to receive balancing screws 4a.

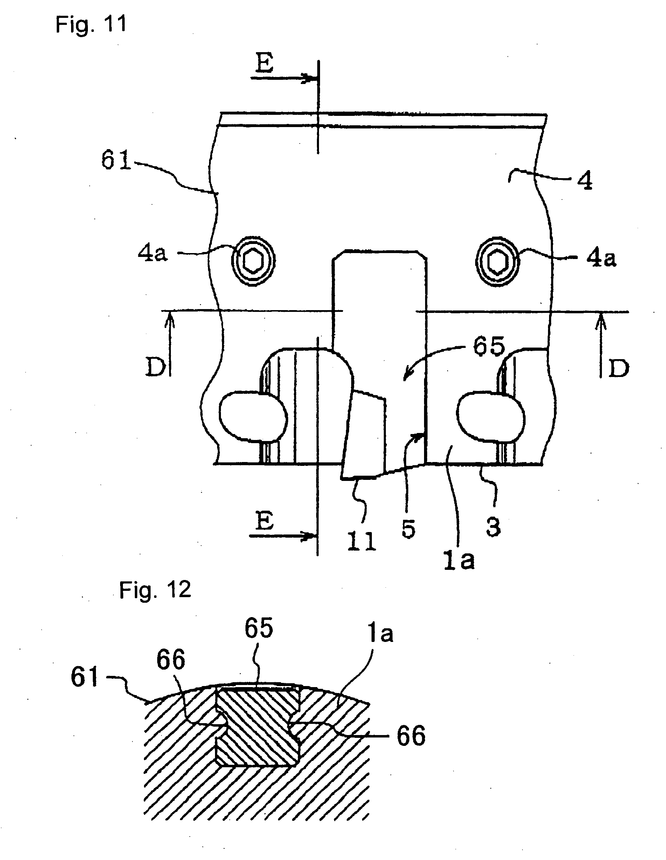

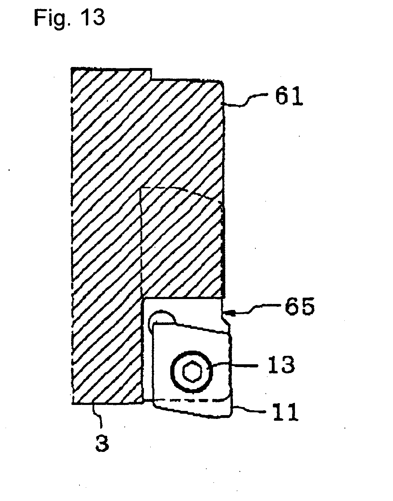

Next, referring to Figures 11-13, we will explain a cutting insert holder 61, wherein the adjusting members, shown in Figure 1, for securing the cutting inserts to the base are integrated into the base by insert molding when the cutting insert holder is injection molded; the adjusting members are not fixed to the base by screw-driving in this embodiment. In this embodiment, the adjusting members 15 with the screw taps 16, as shown in Figure 1, 4, or 7, are changed so that the adjusting members 65 do not have screw taps, as shown in Figure 11. The adjusting members 65 are secured to the base 1 by placing them, when the base 1a of the cutting insert holder 61 is injection molded, in the mold at the positions corresponding to those parts of the insert recesses at which the adjusting members are located. The adjusting members 65 of this embodiment are different from those shown in Figure 1 only in the respect that the adjusting members 65 are fixed to the base 1a by insert molding. Therefore the parts common to both embodiments are given the same reference numerals, an explanation of which is omitted here.

In this embodiment, the adjusting members 65 are fixed to the locations corresponding to the insert recesses 5 of the cutting insert holder 1 shown in Figure 1 when the base 1a is injection molded with the adjusting members inserted. Therefore the base 1a has neither screw taps for securing the adjusting members to the base nor those for shifting the adjusting members along the axis. Also, each adjusting member 65 does not have a screw tap for fixing itself to the base 1a. As understood from Figures 11-13, especially to prevent them from springing out of the base in the direction of the radius and to improve the fixation of them to the base 1a, recesses 66 are formed at suitable spots in the side faces of the respective adjusting members 65, which ensures tight fastening of the adjusting members to the base 1 through insert molding. To these adjusting members are secured the cutting inserts 11 with the clamp screws 13, in the same manner as in the embodiment above. Although the screw taps in the adjusting members for securing of the cutting inserts 11 thereto are not shown in Figure 1, the screw taps are also made in the adjusting members in the same way as in those of cutting insert holder 1 shown in Figure 1. From this viewpoint, the adjusting members 65 of this embodiment can also be called a member with a screw tap. To these adjusting members can be secured the cutting inserts by clamping and not by screw-driving.

The method for producing the cutting insert holder as mentioned above will be explained in the followings. Each of the cutting insert holders explained above may be formed by setting the female-screw members or adjusting members, which are inserts, at predetermined positions in a metal mold, closing it with the inserts kept in place, and injecting a plastic material into it. Positioning means such as insert pins should be used, so that the inserts are properly positioned and kept in place. The parts, the dimensions of which require a certain accuracy, such as the inner circumferential face of the hole 2 into which the spindle S of the milling cutter is to be inserted, and the parts to which the cutting inserts are to be fixed, are given a margin to be machined precisely later. The precision working on such parts ensures a desired accuracy in the dimensions.

Since the base of the cutting insert holder according to the present invention are made by the injection molding of a plastic material, the female-screw members or the adjusting members can be fixedly embedded in the base as inserts, whereby the inserts can be secured to the base tightly. (The word "embedded" means a variety of the embedded states; it means from that an insert is fixed in the base in its entirety to that part of an insert is fixed therein.) This method realizes the cutting insert holder that tightly integrates the inserts such as the female-screw members with the base. Moreover, the cutting insert holder, which is lighter than that made of aluminum, can be produced efficiently at a low cost. Furthermore, the machining of the parts that require highly precise dimensions is easy, since the base is of a plastic. Even though the inserts such as metal female-screw members are fixedly embedded in the base, it is obvious that the cutting insert holder of the invention can be produced at a very low cost.

Hereinbefore, we have explained the present invention, taking as an example the embodiment in which some parts, such as female-screw members, are inserted in the mold when the base is injection molded. However, if the fixation of the cutting inserts or adjusting members to the base does not require a large fixing force, or the use of a screw with a large thread enables the plastic to endure the driving torque applied through the male screw for fixing the cutting insert to the base, the screw taps may be formed in the base itself, which has been made through injection molding. In this case, the production cost of the cutting insert holder can be further lowered.

The plastic, of which the base or the cutting insert holder is made, is the same as that of the first embodiment. Therefore the explanation of the plastic is omitted.

In the preceding description, the present invention is embodied to the cutting insert holder for a face milling cutter, which is an example of the rotating cutting tools. However, the cutting insert holder of this embodiment, as well as that of the first embodiment, is not limited to the cutter.

The cutting insert holder in accordance with the present invention may also be applied to throwaway cutting tools.

Because the base 1a of the cutting tool holder 1a is made of a plastic and disposable, the present invention realizes a throwaway cutting tool which has a lighter weight, and can be produced at a lower cost. The improved cutting insert holder, in turn, makes it possible to machine workpieces at an improved efficiency and then to reduce the cost of machining. In particular, this embodiment, where the base 1a is produced by injection molding, is able to reduce the cost greatly. After a cutting tool, which employs the cutting tool holder of the second embodiment, is used for a predetermined time period, or in a predetermined number of working processes, the cutting tool in its entirety can be changed to a new one. Because the new tool has cutting inserts 11, the cutting edges of which have been adjusted so that they are arranged at the same level, and have been fixed to the cutting insert holder, a simple and quick changing of tools, without idle time, is achieved. This changing improves the working efficiency and reduces the working cost. In other words, the employment of the disposable plastic cutting insert holder can reduce the total working cost, because the cost of producing the disposable cutting insert holder is lower than the loss due to non-working during the idle time necessary to change and adjust the cutting inserts.

### <An Embodiment of the Cutting Tool>

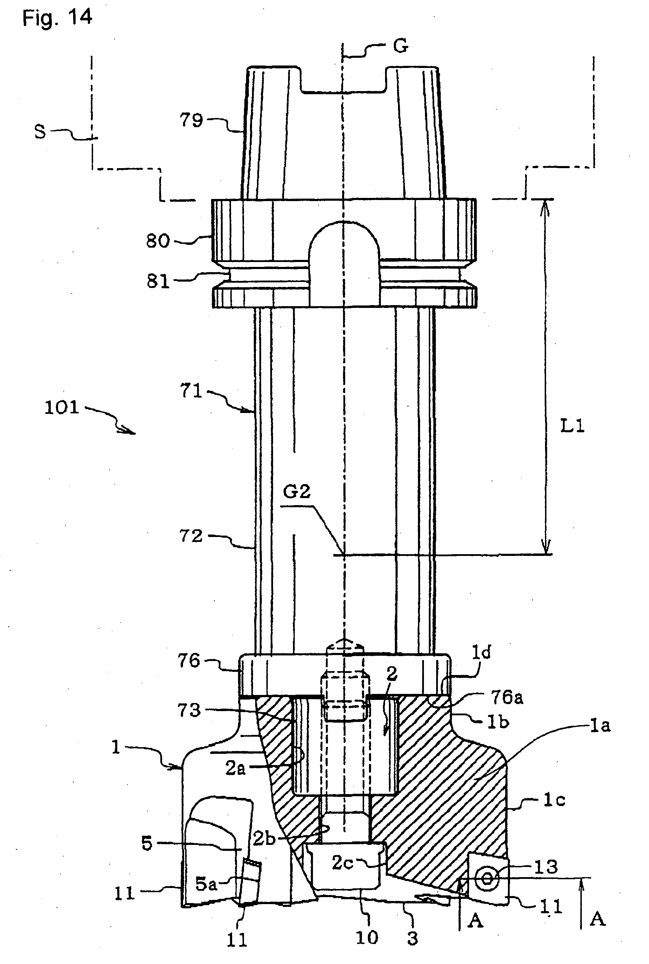

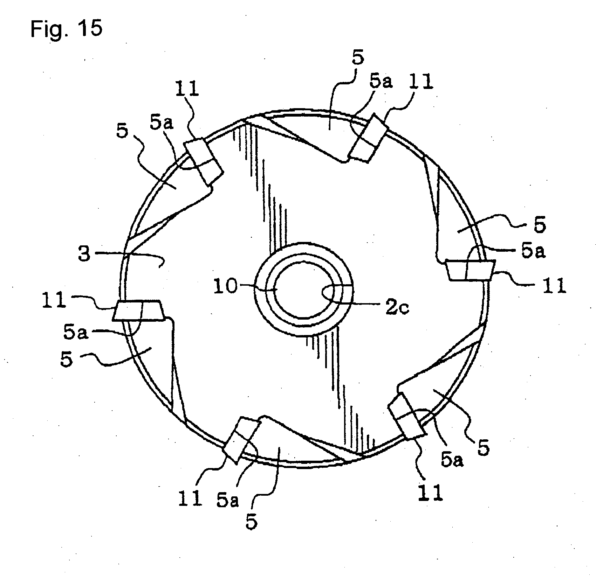

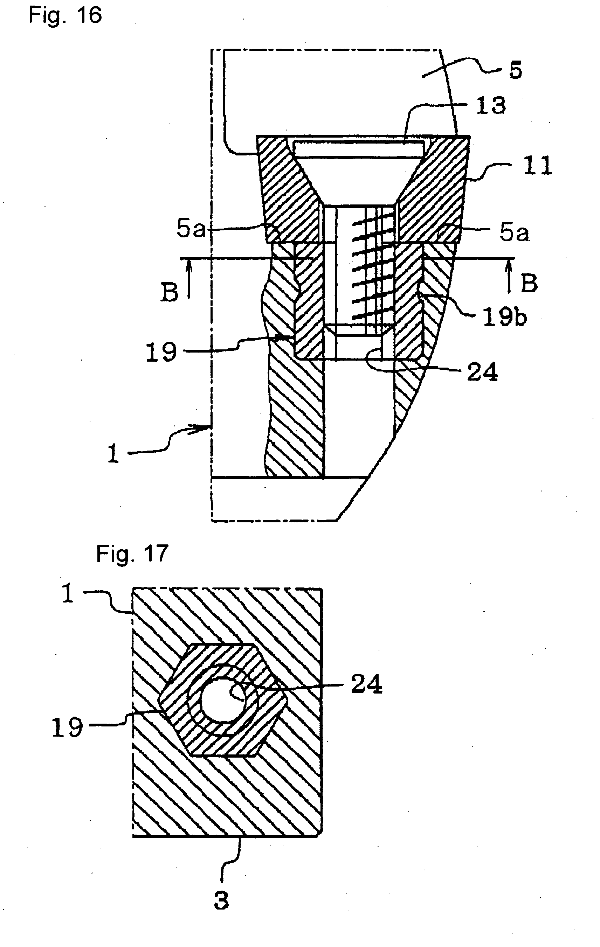

The best mode for carrying out the present invention will be explained in detail based on an example of the cutting tool, e.g. a face milling cutter, shown in Figures 14-20. In Figure 14, reference numeral 101 denotes a cutting tool of this embodiment. As shown in the figure, the cutting tool 101 for a face milling cutter comprises a cutting insert holder 1 and a tool holder 71. The cutting insert holder 1 has a base 1a of a plastic or resin, as shown in Figure 14, and female-screw members 19, as shown in Figure 16, both being integrally formed.

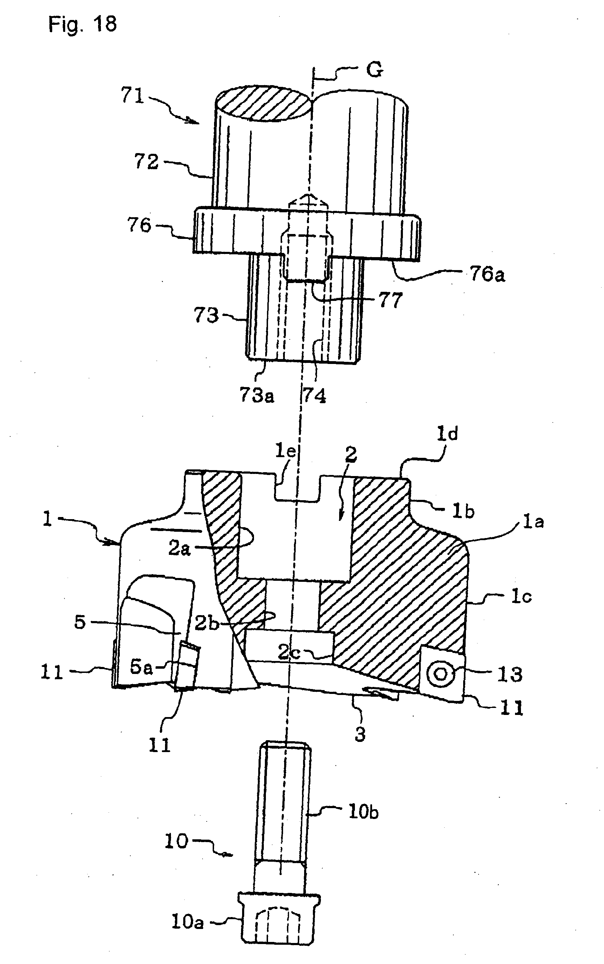

The base 1a has the shape of a combined cylinder comprising an upper cylinder 1b and a lower cylinder 1c, both having the same central axis, in which the upper part 1b has a small diameter and the lower part 1c a large diameter. The base 1a has several, for example, six recesses 5, arranged at equal angular intervals around the rotation axis, or the central axis G, for receiving the cutting inserts and discharging chips in the front end 3 of the base 1a near the outer circumference of the base. Note that the front end 3 is the bottom end when the cutting insert holder 1 shown in Figure 14 is placed vertically. In each recess 5 is formed a cutting insert seat 5a to which a cutting insert is fixed. To each cutting insert seat 5a is secured an indexable cutting insert 11 made of, for example, a cemented carbide, by screw-driving using a clamp screw 13, which is a male screw. As shown in Figures 16 and 17, the clamp screw 13 is driven into a screw tap 24 formed in a metal female-screw member 19, which has been inserted in the mold in the injection molding of the base 1a. In other words, the metal female-screw member 19 has the screw tap 24, inside which a female screw is formed. The metal member 19 has the shape of, for example, a hexagon nut, and a circumferential groove 19b in the outer walls thereof to improve its fixation to the base 1a, or to prevent itself from slipping off the base 1a.

As shown in Figures 14 and 18, a hole 2, passing through the cutting insert holder 1 vertically, is pierced in the central part of the holder including the rotation axis G. The transverse cross section of the hole 2 has the shape of a circle. The tool holder 71, made of a material such as SCM415, which has parts whose transverse cross sections are circles having different diameters, is engaged with the upper part of the hole 2, whereby the cutting tool is fixed to the tool holder. The upper part, which means the upper part on the sheet including Figure 14 or 18, of the hole 2 is enlarged to form a large cylindrical hole 2a to receive a projection 73 which projects from the central part of a front end face 76a of a shaft 72 belonging to the tool holder 71, so that the central axis of the tool holder 71 and that of the large cylindrical hole 2a are aligned. At the middle part, the hole 2 has a smaller diameter, and this part is called a small cylindrical hole 2b. At the lower part, the hole 2 is enlarged again to form a cylindrical opening 2c in the front end 3 of the cutting insert holder 1. The hole 2 has such a shape that the central axis of the large cylindrical hole 2a, that of the small cylindrical hole 2b, and that of the cylindrical opening 2c are aligned. The cylindrical opening 2c receives the head of a screw 10, an example of which is a bolt with a head, to fix the cutting insert holder 1 to the tool holder 71. The head of the screw 10 is received in the opening 2c in such a manner that the head is completely sunk in it. As shown in Figure 18, the tool holder 71 has a bolt indentation 74 bored in the central part of an end face 73a of the projection 73 so that the axis of the bolt indentation 74 is the same as the rotation axis G.

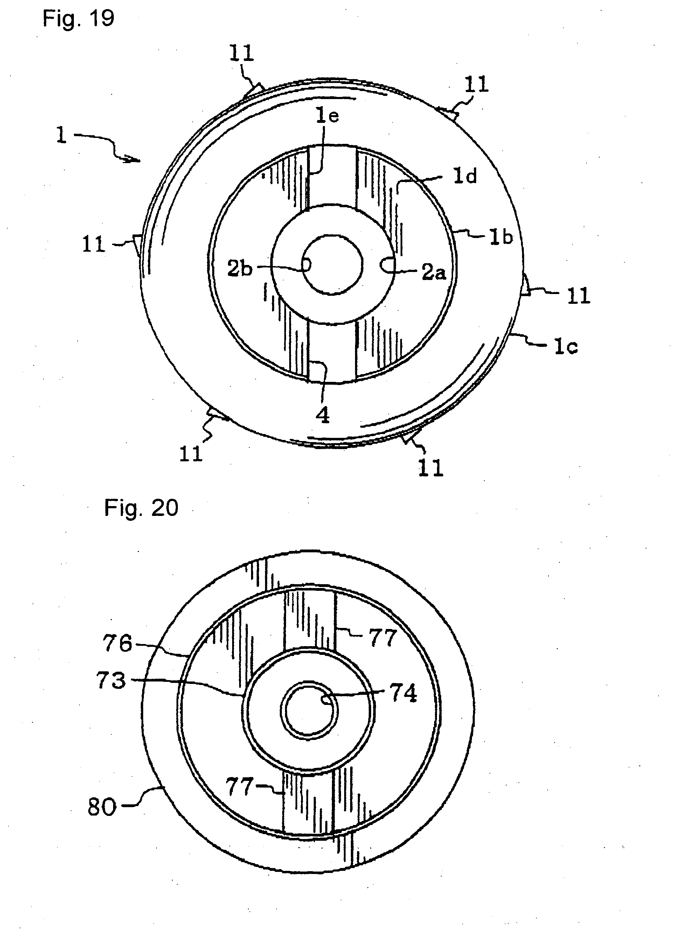

As shown in Figure 14, the tool holder 71 has an engaging part 79, the outer circumferential wall of which is tapered toward its top end, at the upper end of its shaft 72. The engaging part 79 is engaged and chucked with the spindle S of the machining center. The tool holder 71 also has a large cylindrical positioning part 80 at its lower part, which means a lower part on the sheet including Figure 14. A grip groove 81 to be gripped by the changer arm of an ATC (not shown in the figures) is formed along the circumferential face of the large cylindrical positioning part 80. The grip groove will sometimes be called "arm-grip groove". The tool holder 71 has a large cylindrical part 76, which is part of the circumferential wall rising from the front end face 76a of the holder. The outer diameter of the large cylindrical part 76 is the same as that of the upper part 1 of the cutting insert holder 1. When the cutting insert holder 1 is secured to the tool holder 71, the front end face 76a is pressed against the back end 1d of the upper part 1b. As shown in Figures 18 and 19, grooves 1e are cut in the back end 1d along the diameter thereof. On the other hand, at diametrically both sides of the projection 73 on the front end face 76a, protrusions 77 are formed so that the protrusions are engaged with the grooves 1e. By inserting the projection 73 of the tool holder 71 into the large cylindrical hole 2a in the upper part of the cutting insert holder 1 so that the protrusions 77 are engaged with the grooves 1e, the tool holder and the cutting insert holder are prevented from rotating independently around the axis G.

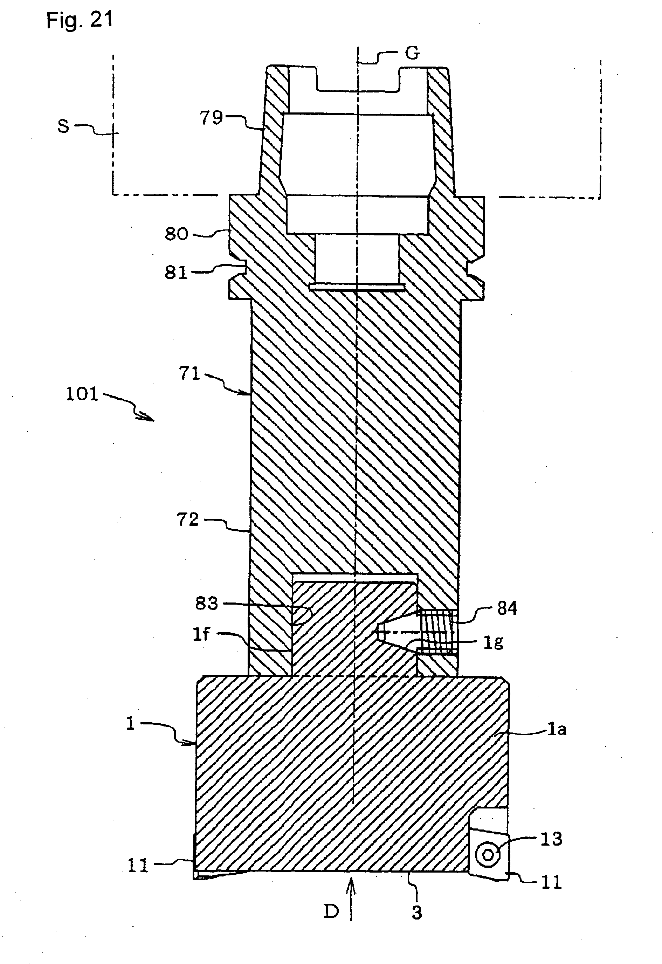

Then, the projection 73 of the tool holder 71 is inserted into the large cylindrical hole 2a in the upper part of the cutting insert holder 1, and the protrusions 77 of the former are engaged with the grooves 1e of the latter. With these insertion and engagement maintained, a screw 10 with a head 10a is driven home into the bolt indentation 74 through the small cylindrical hole 2b from the cylindrical opening 2c. Thus, as shown in Figure 21, a cutting tool assembly 101, having the tool holder 71, the cutting insert holder 1 whose base 1a is fixed to the tool holder 71, and the cutting inserts 11 secured to the cutting insert holder 1 is assembled.

Since the base 1a of the cutting tool assembly 101 is made of a plastic, the specific gravity of which is about 1.5 in this embodiment, the cutting tool assembly 101 has a lighter weight than a cutting tool assemblywhose base is made of aluminum, the specific gravity of which is 2.7. This light weight makes it possible to enlarge the entire length and the diameter of the cutting insert holder, which, in turn, reduces the number of working steps or the working time period. This light weight also serves to shift the position of the centroid G2 of the cutting tool assembly 101 toward the machining center, or toward the grip groove 81 of the tool holder 71 along the axis G, compared with that of the centroid of a conventional cutting tool assembly whose cutting insert holder is made of a metal. This shift of the centroid means that the length L1 between the gauge line and the position of the centroid G2 is shortened. As a result, the moment generated when the cutting tool assembly 101 is changed is certainly reduced, which leads to a reduction in the time period necessary for changing the tools with the changer arm of an ATC. Therefore the efficiency or productivity of machining is improved.

Methods for forming the base 1a of the cutting insert holder 1 are not limited as long as the base 1a is made of a plastic. However, the production, including the formation and the working, of the base 1a is facilitated in this embodiment, since the base 1a is formed through injection molding. Since the screw taps 24, into which the clamp screws 13 are driven to fix cutting inserts 11, are formed in the female-screwmembers 19, which have been insert molded in the injection molding of the base 1a, the screw taps 10 sustain less wear-out and are able to keep the strength of the fixation with the male and the female screws. Although the female-screw member 19, which is insert molded together with the base 1a, usually has an inherent screw tap 24, the screw tap may be made in a metal member which does not have a screw tap but the same shape as that of the female-screw member 19, after the metal member is fixedly and integrally embedded in the base 1a through insert molding. Also, the female screw may be made directly in the plastic base 1a, or by tapping a female screw in a metal member, which is then embedded or pressed in a hole made in the plastic base 1a after the formation of the base 1a.

Although the tool holder 71 and the cutting insert holder 1 are combined by driving the screw with a head 10 into them along the axis G in the embodiment explained above, they may be combined by other fixing means. An example of the other means will be explained based on Figure 21.

In the followings, only the fixing means, which is the only part different from the corresponding part in the previous embodiment, will be explained. The parts and components common to, or the same as those of the previous embodiment have the same reference numerals in Figure 21.

In this embodiment, the tool holder 71 has a mortise 83 to be engaged with the cutting tool holder 1 in the central part of its end face. On the other hand, the base 1a of the cutting tool holder 1 has a cylindrical tenon 1f protruding from its back end to be engaged with the mortise 83. After the tenon 1f is inserted into the mortise 83, a fixing screw 84 is driven into an indentation 9g cut in the side wall of the tenon 1f through the tool holder 71 from a side part which is located on the outer circumference of the holder 71 and transversely outside of the side wall of the mortise 83. In Figure 21, the tool holder 71 and the cutting insert holder 1 are fixed by driving the fixing screw 84 into the tool holder 71 in the direction of the radius thereof. Although it is not shown in the figure, the fixation may be made by hammering a pin in place of driving the fixing screw 84.

In this example, which is embodied in a face milling cutter, the cutting inserts 11 are fixed to the cutting insert holder 1 by driving clamp screws 3 directly into screw taps made in the cutting insert seats 5a of the insert-holding recesses 5. However, the cutting inserts may be fixed to the cutting insert seats 5a through adjusting members, as shown in Figures 1, 4, and 7. An explanation of the structures to fix the cutting inserts shown in Figures 1, 4, and 7 to the adjusting members, and the mechanism to finely adjust the height of each cutting edge by shifting the adjusting member along the axis G is omitted here, because they have been described in detail in regard to the first and the second embodiments.

Although the height of each cutting edge cannot be adjusted, adjusting members themselves may be inserted in the mold when the cutting insert holder 1 is formed through injection molding. In this case, fixing means for securing a cutting insert, such as a screw tap, is formed in each adjusting member before or after the insert molding. The insert molding of the adjusting members will reduce the weight of the cutting insert holder, because they do not require screws to secure themselves to the holder.

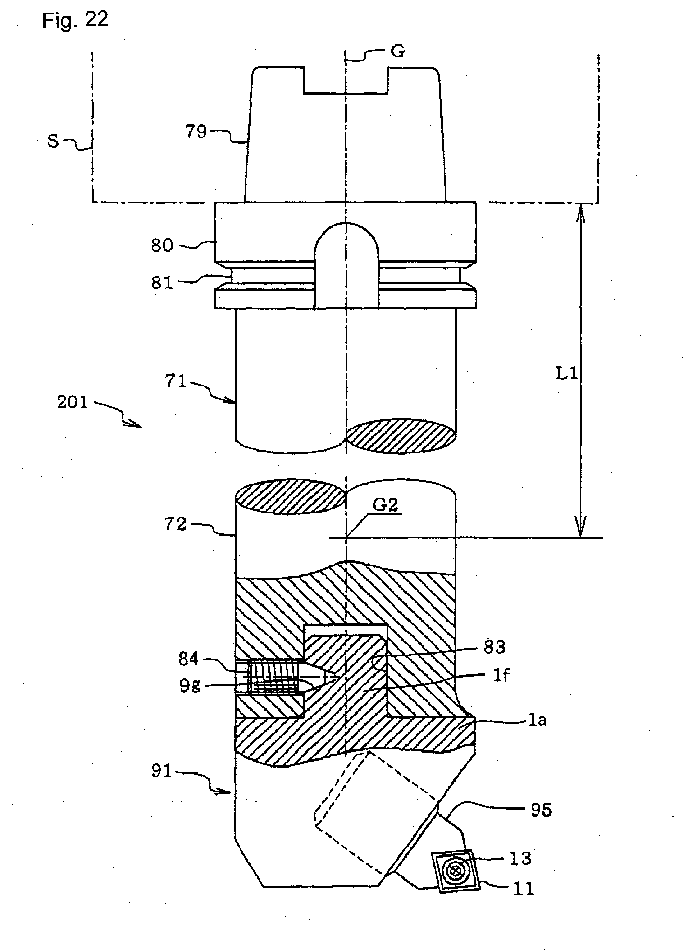

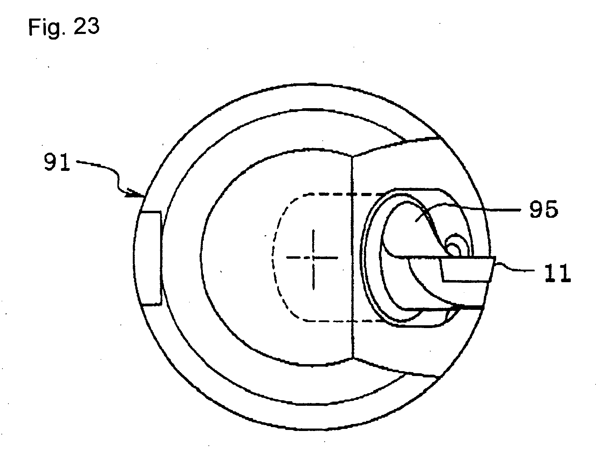

Several embodiments for a face milling cutter have been explained hereinabove. However, the cutting tool according to the present invention is not limited to those embodiments. As shown in Figures 22 and 23, it may be employed for a boring bar 201. The boring bar 201 has a cutting insert holder 91, as boring head, which is fixed to a tool holder 71 in the same way as the cutting insert holder 1 employed in the face milling cutter 71 shown in Figure 21. The tool holder 71 has a mortise 83 in the central part of its end face to engage with the cutting tool holder 91. On the other hand, the base 1a of the cutting tool holder 91 has a cylindrical tenon 1f protruding from its back end to be engaged with the mortise 83. After the tenon 1f is inserted into the mortise 83, a fixing screw 84 is driven through the tool holder 71 from a side part which is located on the outer circumference of the holder 71 and transversely outside of the side wall of the mortise 83, into an indentation 9g cut in the side wall of the tenon 1f. In this embodiment, because the fixing means and the tool holder 71 are the same as those explained above, the same reference numerals are given to the same parts or components in the figures, and a detailed explanation of them is omitted. The plastic base 1a of the cutting insert holder 91 has an adjusting member 95 embedded in a side part of its front end. To the adjusting member 95 is secured a cutting insert 11 with a clamp screw 13. The adjusting member 95 may be fixed to the base 1a by insert molding when the base 1a is injection molded. The adjusting member 95 may also be fixed by driving a screw through the adjusting member into a bore for securing the adjusting member, which bore is made in the base 1a after injection molding.

The boring bar 201 provides the same advantages as the face milling cutter above, since the base 1a of the cutting insert holder 91 is made of a plastic, which obviously leads to a reduction in the weight of the cutting tool and the moment generated when the cutting tools are changed. In order to achieve the reduction in the weight and the moment effectively, it is preferable to increase the volume of the cutting tool holder at the end part of the cutting tool. Taking into consideration the strength and the durability of the cutting tool as well as a predetermined maximum weight of the tool and the maximum moment in the changing, the user should decide the volume.

When injection molding is employed to form the base of the cutting insert holder, the base can be produced very effectively. However, the base may be shaved out from a block. Even when the base is formed through injection molding, the parts of the base that require precision working, such as the part for engaging with the tool holder and the parts corresponding to the cutting insert seats in the insert-holding recesses, should have a margin to be machined precisely.

If the fixation of the cutting inserts or adjusting members to the cutting insert holder does not require a large fixing force, or the use of a screw with a large thread enables the plastic of the base to endure the driving torque applied through the male screw to fix the cutting insert to the base, the screw taps may be made directly in the base itself.

An explanation of the plastic for the base is omitted here, because it is the same as that for the bases in the first and second embodiments.

Hereinbefore, the cutting tool in accordance with the present invention is embodied to a part of a face milling cutter or that of a boring bar. However, the cutting tool of the present invention is embodied not only to those, but also to various cutting tools with a tool holder used in a machining center. The present invention is more advantageous, as the cutting tool has a longer axis and a larger diameter. It is because the weight and the moment in the changing matter more with a cutting tool that has a cutting tool holder of such a shape.

## Claims

1. A cutting insert holder comprising a base made of a plastic to which at least one cutting insert is fixed.

2. The cutting insert holder as claimed in claim 1, wherein the base is made through injection molding.

3. A cutting insert holder as claimed in claim 1 or 2, further comprising at least one adjusting member having a hole, and at least one metal female-screw member which is fixedly embedded in the base, the metal female-screw member having a screw tap for receiving a male screw, whereby the cutting insert is fixed to the base by passing the male screw through the cutting insert and through the hole in the adjusting member and driving home the male screw into the screw tap.

4. A cutting insert holder as claimed in claim 1 or 2, further comprising at least one metal female-screw member which is fixedly embedded in the base, the metal female-screw member having a screw tap for receiving a clamp screw, whereby the cutting insert is fixed to the base by driving home the clamp screw through a hole pierced in the cutting insert into the screw tap.

5. A cutting insert holder as claimed in claim 1 or 2, further comprising at least one adjusting member which is fixedly embedded in the base, the adjusting member having a screw tap for receiving a clamp screw, whereby the cutting insert is fixed to the base by driving home the clamp screw through a hole pierced in the cutting insert into the screw tap.

6. The cutting insert holder as claimed in claim 3 or 4, wherein the base and the female-screw member are formed integrally through insert molding.

7. The cutting insert holder as claimed in claim 5, wherein the base and the adjusting member are formed integrally through insert molding.

8. The cutting insert holder as claimed in any one of claims 1-7, wherein the cutting insert holder is used for a rotating cutting tool.

9. The cutting insert holder as claimed in any one of claims 1-8, wherein the cutting insert holder is used for a throwaway cutting tool.

10. The cutting insert holder as claimed in any one of claims 1-9, wherein the plastic is an amorphous plastic including from 30 wt% to 60 wt% of glass fibers.

11. The cutting insert holder as claimed in claim 10, wherein the amorphous plastic is a polyether imide resin.

12. A cutting tool comprising the cutting insert holder as claimed in any one of claims 1-11 and at least one cutting insert secured to the cutting insert holder.

13. A cutting tool comprising the cutting insert holder as claimed in any one of claims 3, 5, 7-10 and 11, and at least one cutting insert wherein the cutting insert is secured to the adjusting member of the cutting insert holder.

14. A cutting tool comprising the cutting insert holder as claimed in any one of claims 1-11, and a tool holder to which the cutting insert holder is secured.

15. The cutting tool as claimed in claim 14, wherein the cutting insert holder is secured to the tool holder by screw-driving a screw member.

16. The cutting tool as claimed in claim 14, wherein the cutting insert holder is secured to the tool holder by hammering a pin.
